# EUROPEAN PATENT APPLICATION

(11) **EP 2 210 656 A1**
(43) Date of publication of application: **28.07.2010**
(21) Application number: 09151458.8
(22) Date of filing: 27.01.2009
(51) Int. Cl.: B01D 53/22, B01D 53/62

(54) **Hybrid carbon dioxide separation process and system**

(71) Applicant: General Electric Company, Schenectady, NY 12345 (US)
(72) Inventor: Finkenrath, Matthias, 85748 Garching b. München (DE)
(74) Representative: Szary, Anne Catherine

(57) **Abstract**

The present application relates to separation processes and systems and more specifically to hybrid carbon dioxide separation processes. In one embodiment, the system for the separation or removal of carbon dioxide comprises an apparatus 11 for a selective separation of carbon dioxide (CO₂) from flue gas - typically exhaust gases, syngas or natural gas streams - using one or more so-called CO₂ reverse selective membrane(s) in the first separation unit 11 to enrich a feed gas stream 10 which contains carbon dioxide with CO₂ and by separating other constituents of the gas stream. Thus, the feed gas stream is separated in the first separation unit by CO₂-reverse-selective separation into a CO₂-lean gas stream 12 and a CO₂-enriched gas stream 13. The CO₂-enriched gas stream 13 is fed to a second separation unit which is a CO₂-selective separation unit 14. The second separation results in a purified CO₂-rich gas stream 15 and a remaining CO₂-lean gas stream 16.

## Description

### BACKGROUND OF THE INVENTION

The present application relates to separation processes and systems and more specifically to hybrid carbon dioxide separation processes.

The emission of carbon dioxide (CO₂) from the burning of fossil fuels has been identified as the major contributor to global warming and climate change. However, for the immediate term over the next 20 - 30 years at least, the world will continue to rely on fossil fuels as the primary source of energy. The challenge for the fossil fuel industry is to find cost-effective solutions that will reduce the emission of carbon dioxide into the atmosphere, since in many industrialized nations power plants are subject to, or will become subject into economic penalties for the emission of various substances, particularly carbon dioxide, to the environment. For example, controls on carbon dioxide emissions result in emissions trading and taxes, and require permits. As the cost of emission penalties increases, measures to curb emissions are continually sought, either as a retrofit to existing plants to reduce emissions and/or as a design of new carbon dioxide lean power plants to lower overall emissions.

One carbon dioxide capture method is for example the fuel decarbonization process, also known as a pre-combustion capture pathway. The process converts hydrocarbon fuels into a hydrogen based fuel and carbon monoxide (CO) (e.g. synthesis gas or so-called "syngas"). The carbon monoxide is then converted into carbon dioxide which is removed from the system before combustion in the power plant.

A typical decarbonization plant is highly complex as it involves many catalytic reactors such as a desulphirization reactor, pre-reformer, auto-thermal reformer and water gas shift reactor. Furthermore, the process is currently inefficient and costly. For example, a typical decarbonization process often results in an 8 - 12 % penalty in the overall plant efficiency due to the energy which is required and released during the reforming process. Thus, there is a strong need to create a more efficient decarbonization system.

### BRIEF DESCRIPTION OF THE INVENTION

In view of the above, embodiments of a hybrid carbon dioxide separation system for selective carbon dioxide removal and hydrogen generation, and methods for using the same are provided.

Further aspects, advantages and features of the present invention are apparent from the dependent claims, the description and the accompanying drawing.

According to a first aspect of the application, the hybrid carbon dioxide separation system can comprise a carbon dioxide reverse selective membrane as a first separation unit and a downstream second carbon dioxide separation unit.

According to another aspect of the application, the downstream second separation unit of the hybrid carbon dioxide separation system is a carbon dioxide selective separation unit.

According to a further aspect of the application, the downstream second carbon dioxide separation unit of the hybrid carbon dioxide separation system is a chemical absorption unit.

According to still another aspect of the application, the chemical absorption unit of the hybrid carbon dioxide separation system involves a reversible chemical reaction between the carbon dioxide of an absorbent in an aqueous solution.

According to a further aspect of the application, the absorbent of the chemical absorption unit is a water-soluble primary, secondary or tertiary alkyl, hydroxyl alkyl and/or arylalkyl amine.

According to a still another aspect of the application, in the hybrid carbon dioxide separation system the primary, secondary or tertiary alkyl or hydroxyl alkyl amine is mono ethanol amine, diglycol amine, diethanol amine, di-isopropyl amine, triethanol amine and/or methyl-diethanol amine.

According to a further aspect of the application, the primary, secondary or tertiary alkyl and/or hydroxyl alkyl amine is a sterically hindered amine having bulky substituents on the nitrogen atom.

According to a still another aspect of the application, the absorbent of the downstream second carbon dioxide separation unit is an alkaline salt of a weak acid.

According to a further aspect of the application, the absorbent is a sodium or potassium salt of carbonate, phosphate, borate, arsenite, or phenolate.

According to still another aspect of the application, the absorbent of the downstream second carbon dioxide separation unit is an organic or inorganic solvent.

According to a further aspect of the application, the organic solvent is a dimethyl ether of a polyethylene glycol or methanol.

According to still another aspect of the application, the downstream second carbon dioxide separation unit of the hybrid carbon dioxide separation system is a chemical absorption unit in a pressure swing unit.

According to a further aspect of the application, the downstream second carbon dioxide separation unit of the hybrid carbon dioxide separation system of the chemical absorption unit is a temperature swing unit.

According to a further aspect of the application, the downstream second carbon dioxide separation unit of the hybrid carbon dioxide separation system is an electrical swing adsorption unit.

According to still another aspect of the application, the downstream second carbon dioxide separation unit of the hybrid carbon dioxide separation system is a carbon dioxide selective membrane.

According to a further aspect of the application, the downstream second carbon dioxide separation unit of the hybrid carbon dioxide separation system is a carbon dioxide hydrate separation unit.

According to another aspect of the application, the present application refers to the use of the hybrid carbon dioxide separation system according to the present application for the separation and sequestration of carbon dioxide.

### BRIEF DESCRIPTION OF THE DRAWINGS

A full and enabling disclosure of the present invention, including the best mode thereof, to one of ordinary skill in the art, is set forth more particularly in the remainder of the specification, including reference to the accompanying figures wherein:

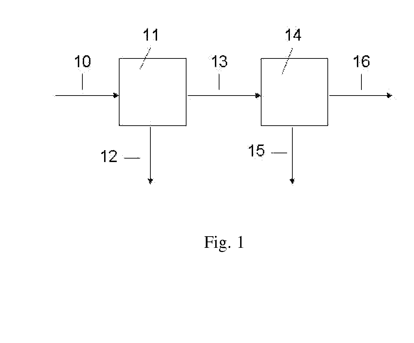

Fig. 1 shows a scheme of the carbon dioxide separation system according to one embodiment of the present invention.
Feed gas stream **10** which is containing CO₂ (e.g. flue gas or syngas) enters the first separation unit **11** comprising a carbon dioxide reverse selective membrane. The separation results in a separated CO₂-lean gas stream **12** and a CO₂ enriched gas stream **13.** The CO₂ enriched gas stream **13** enters the second separation unit **14.** The second separation results in a purified CO₂-rich gas stream **15** and a - remaining - CO₂-lean gas stream **16.**

### DETAILED DESCRIPTION OF THE INVENTION

Reference will now be made in detail to the various embodiments of the invention, one or more examples of which are illustrated in the figures. Each example is provided by way of explanation of the invention, and is not meant as a limitation of the invention. For example, features illustrated or described as part of one embodiment can be used on or in conjunction with other embodiments to yield yet a further embodiment. It is intended that the present invention includes such modifications and variations.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Disclosed herein are embodiments of apparatus and process for the separation and/or removal of carbon dioxide and methods and systems for using the same.

In one embodiment, the system for the separation or removal of carbon dioxide comprises an apparatus for a selective separation of carbon dioxide (CO₂) from flue gas - typically exhaust gases, syngas or natural gas streams using one or more so-called CO₂ reverse selective membrane(s) in the first separation unit to enrich a feed gas stream which contains carbon dioxide with CO₂ and by separating other constituents of the gas stream. The CO₂ containing feed gas stream which enters the first separation unit may represent any CO₂ containing gas stream - typically flue gas, syngas or exhaust gas. The feed gas stream is separated in the first separation unit by CO₂-reverse-selective separation into a CO₂-lean gas stream and a CO₂-enriched gas stream. The CO₂-enriched gas stream is fed to a second separation unit which is a CO₂-selective separation unit.

By enriching the CO₂ content in the first reverse-selective separation step, the CO₂ of the gas stream which enters the second separation unit will be increased and the volumetric flow will be reduced. This will reduce the energy requirements (OPEX) and capital requirements (CAPEX) of the second separation unit, which performs the main part of the CO₂ separation. In the second separation unit, the CO₂ enriched gas stream is separated into a purified gas stream which has a high CO₂ concentration and a CO₂ lean gas stream.

The membranes used for CO₂ removal typically do not operate as filters, where small molecules are separated from larger ones through a medium with pores. Instead, they operate on the principle of solution-diffusion through a nonporous membrane. The CO₂ first dissolves into the membrane and then diffuses through it. Because the membrane does not have pores, it does not separate on the basis of molecular size. Rather, it separates based on how well different compounds dissolve into the membrane and then diffuse through it.

Because carbon dioxide, hydrogen, helium, hydrogen sulfide, and water vapor, for example, permeate quickly, they are called "fast" gases. Carbon monoxide, nitrogen, methane, ethane and other hydrocarbons permeate less quickly and so are called "slow" gases. The membranes allow selective removal of fast gases from slow gases. For example, as CO₂ is removed from a natural gas stream, water and H₂S are removed at the same time; but methane, ethane, and higher hydrocarbons are removed at a much lower rate.

However, the reverse-selective membranes which are used in the apparatus and the processes of the present application are selectively permeable to carbon dioxide and relatively impermeable to the less soluble components of the original gas feed gas stream, including hydrogen and carbon monoxide. Thus, when the initial gas stream is contacted with the reverse-selective membrane according to the processes of the present application, a CO₂-enriched permeate and a CO₂-lean retentate are provided. The CO₂-enriched permeate passes through the membrane and the CO₂-lean retentate remains on the feed side of the membrane.

Reverse-selective membranes are rubbery membranes and their operating mechanism is based on the fact that bigger, more condensable molecules (i. e., more soluble molecules) are preferentially permeated. Solubility is the key factor that enables the CO₂-lean retentate to preferentially permeate over the less soluble components including hydrogen or nitrogen.

In contrast, most other typical reverse-selective membranes (i. e., "regularly-selective" membranes) are glassy membranes, and as such, smaller molecules diffuse much faster through the membrane than larger molecules. Diffusivity, rather than solubility, is the controlling factor for these types of membranes. In "regularly-selective" membranes, hydrogen will permeate across the membranes more readily, resulting in a retentate containing CO₂.

Reverse-selective membranes, which are selectively permeable to carbon dioxide and are useful in the processes of the present invention, are well known from the state of the art. Such membranes are for example commercially available from Membrane Technology and Research, Inc. in Menlo Park, CA and have been described in U.S. Patent Nos. 4,963,165; 6,361,583; 6,572,679; and 6,572,680 (assigned to Membrane Technology and Research), the contents of which are incorporated by reference in their entirety.

Said reverse-selective membranes may be based on polyether-polyamide block copolymers. The permeation properties of these membranes are optimized for separating polar gases from nonpolar gases.

The structure of the polyether-polyamide block copolymers of said reverse-selective membrane exhibit - for examples - the following general structure:

HO-[-(CO)-PA-(CO)-O-PE-O]ₙ-H

wherein PA is an aliphatic polyamide block and PE is a polyether block. As such, there is a repeat unit of polyether-polyamide block copolymers. The aliphatic polyamide (PA) units are those such as nylon 6 or nylon 12 and the polyether (PE) units are those such as polyethylene glycol or polytetramethylene glycol.

The carbon dioxide enriched gas stream which results from the CO₂-reverse selective separation in the first apparatus is fed to a second separation unit in which a CO₂-selective separation is accomplished. This CO₂-selective separation can be achieved by different separation methods.

According to one embodiment of the present application, the CO₂-selective separation of the second unit can be achieved by a chemical absorption step. Chemical absorption involves one or more reversible chemical reactions between carbon dioxide and an aqueous solution of an absorbent, such as a water-soluble primary, secondary or tertiary alkyl, hydroxyl alkyl and/or arylalkyl amine - typically an alkanolamine - or a basic alkali salt - typically potassium carbonate. Upon heating, the reaction product of carbon dioxide and the absorbent bond between the absorbent and the carbon dioxide can be broken, yielding a stream which is enriched in carbon dioxide.

Typically, alkanolamines are used since it can be considered that the hydroxyl group serves to reduce the vapour pressure and increase the water solubility, while the amino group provides such a grade of alkalinity in the aqueous solution which is necessary to absorb the acid carbon dioxide.

Typical examples for primary amines which can be used in the CO₂ separation step are: monoethanol amine (MEA) and diglycol amine (DGA). MEA represents the traditional solvent for carbon dioxide absorption because it is the least expensive of the alkanolamines and it exhibits a fast reaction kinetic. Moreover, MEA works well at low pressures and low CO₂ concentrations.

Typical examples for secondary amines which can be used include for example diethanol amine (DEA) and di-isopropyl amine (DIPA). Secondary amines have the advantage that their heat of reaction is lower than that of primary amines. This means that the secondary amines require less heat in the regeneration step than primary amines.

Typical examples for tertiary amines which can be used include for example triethanol amine (TEA) and methyl-diethanol amine (MDEA). Tertiary amines react more slowly with carbon dioxide than the above mentioned primary or secondary amines and, thus, require a higher circulation rate of liquid to remove carbon dioxide compared to primary and secondary amines. However, a major advantage of tertiary amines is their lower heat requirements for the liberation of carbon dioxide from the CO₂ containing solvent. Moreover, tertiary amines exhibit a lower tendency to form degradation products in use than primary and secondary amines, and the tertiary amines can be more easily regenerated. In addition, they show lower corrosion rates compared to primary and secondary amines.

Moreover, sterically hindered amines - which are known as KS-1, KS-2, and KS-3 have been developed by Mimura et al. [Mimura, T., Satsumi, S., Mitsuoka S., Development on Energy Saving Technology for Flue Gas Carbon Dioxide Recovery by the Chemical Absorption Method and Steam System in Power Plant, Proceedings of the Fourth International Conference on Greenhouse Gas Control Technologies, pp. 71 - 76, Interlaken, Switzerland, 1999 - the content of which is incorporated by reference in their entirety.] which have a bulky substituent at the nitrogen atom. By using such sterically hindered amines, the capacity regarding the absorption can be greatly enhanced and the desorption temperature can be lowered.

Moreover, mixtures of all kinds of amines can be used.

Furthermore, alkaline salts of various weak acids can be used - typically sodium or potassium salts of carbonate, phosphate, borate, arsenite, and phenolate [Kohl, A.L., and Reisenfeld, F.C., Gas Purification, 4th Edition, Gulf Publishing Company, Houston, Texas, US, 1998]. The major commercial processes in industry that have been developed for CO₂ absorption employ hot aqueous solutions of potassium carbonate (K₂CO₃) for the removal of carbon dioxide from high pressure gas streams employ sodium carbonate and potassium carbonate. Additionally, inhibitors (to limit corrosion) and activators (to improve CO₂ absorption) can be added to such systems. Processes which are based on such activated K₂CO₃-solutons are inter alia well known as "Benfield", "Giammarco", "Stretford" "Catacarb" and "vacuum carbonate" processes.

Typical absorber units for the chemical absorption of CO₂ from carbon dioxide containing gas are also well known from the state of the art [Wong, S., CO₂ Capture - Post Combustion Flue Gas Separation, Asia-Pacific Economic Cooperation, Building Capacity for CO₂ Capture and Storage in the APEC Region, pp. 2-1 - 2-13 - the content of which is incorporated by reference in their entirety.]. The process comprises essentially the following steps: i) an aqueous solution of the absorbent (amine or salt) is contacted in an absorber column with the CO₂ containing gas; ii) the basic amine or salt reacts with the acidic CO₂ vapors to form a dissolved salt and allows the purified gas to exit the absorber; iii) the CO₂ rich amine solution is regenerated in a stripper column concentrating the CO₂ gas stream; iv) the CO₂ lean solution is cooled and returned to the absorber so that the process can be repeated in a closed loop.

According to another embodiment of the present application, the carbon dioxide is physically absorbed in a solvent. This type of absorption follows Henry's Law and the absorption capacity of organic or inorganic solvents for CO₂ increases with increasing pressure and with decreasing temperatures. Accordingly, the absorption of carbon dioxide takes place at high partial pressures of CO₂ and low temperatures. The solvents are regenerated by either heating or by pressure reduction. The advantage of this physical absorption method is that only little energy is needed. However, the low absorption temperatures require that the lean solvent must be returned to the absorber via a refrigerator unit and, moreover, the CO₂ must be present at high partial pressures. Typical solvents that can be used in this method are Selexol (dimethyl ether of polyethylene glycol) and cold methanol.

According to another embodiment of the present application, the carbon dioxide is physically adsorbed. The adsorption process consists of two essential steps: adsorption and desorption of carbon dioxide. The primary adsorption materials which are used are zeolithes. The adsorption - and in the second following step desorption - is achieved with one or more pressure swing or a temperature swing cycle(s).

Besides zeolithes, other sorbents are used containing for example alkali metal oxides, alkali metal hydroxides, alkaline earth metal oxides, and alkaline earth metal hydroxides. Exemplary species of these alkali earth materials include, but are not limited to, Mg(OH)₂, CaO, Ca(OH)₂, MgO, and others. Alkaline earth (Group II) metals such as beryllium (Be), magnesium (Mg), calcium (Ca), strontium (Sr), barium (Ba) and radium (Ra) can be used in the alkaline earth-containing part of the salt. Moreover, alkali titanate, alkali zirconate, alkali silicate and combinations of above mentioned compounds can be used for sorption of carbon dioxide. According to the present application, the term "sorption" is defined herein to include both "adsorption" and "absorption" processes; in addition, adsorbent and absorbent encompass both types of sorbent. Such sorbents are disclosed for example in U.S. Patent 7,314,847 - the contents of which are incorporated by reference in their entirety - which discloses regenerable sorbents for carbon dioxide capture from moderate and high temperature gas streams.

Pressure swing adsorption systems are well known to those of skill in the art. They operate by selectively adsorbing the impurities from the gas. Desorption and regeneration of the adsorbent are accomplished by reducing the adsorptive capacity of the adsorbent by lowering the pressure and purging the adsorbent with a portion of the hydrogen-rich gas. Pressure swing adsorption allows more rapid sorption-desorption cycling than is possible after thermal swing adsorption step.

A pressure swing cycle consists of: adsorption; depressurization; purge at low pressure; and repressurization. This cycle may be carried out using two or more beds of an adsorbent that are capable of selectively adsorbing impurities, such as carbon dixide, from a feed gas. Such adsorbents include molecular sieves, particularly zeolitic molecular sieves, silica gel, activated carbon, and mixtures thereof. The most efficient systems operate with more than two beds, with one or more of the beds undergoing regeneration while the others are adsorbing. The CO₂-lean gas is used as much as possible to purge and repressure other beds.

According to another embodiment of the present application, the carbon dioxide containing gas mixtures which result from the first separation step can further be treated by low temperature distillation (cryogenic separation). The carbon dioxide is liquefied by cooling down the mixture and the liquefied CO₂ - for example - can be transported via pipeline with minimized measurements.

According to another embodiment of the present application, the carbon dioxide can be separated in the second apparatus using a further membrane separation step. Such membranes are also well known from the state of the art and encompass inter alia membranes which are made of cellulose acetates, polysulfones, and polyamides. Membranes that are selective for CO₂ at lower temperatures can include polymeric materials such as polyethers and polyether blends and hybrid membranes such as silanized gamma-alumina membranes. Silanes, such as 2-acetoxyethyl, 2-carbomethoxyethyl and 3-aminopropyl, can be integrated with ceramic membranes to achieve selective CO₂ transport. Moreover, other novel compositions for use in such membranes are known from the state of the art. Such compositions are disclosed for example in U.S. Patent 7,011,694. The composition from which such new membranes are made comprise a polyimide hard segment and an amino group-containing soft segment comprising a polyamine. The compositions may also comprise an interfacially polymerized polyamide.

The polyamines may be selected from the group consisting of poly (2-vinylpyridine), poly (4-vinylpyridine), polyethylenimine, polyallylamine, or any mixture thereof. Typically, the polyamines selected include polyethylenimines having for example a molecular weight of from about 600 to about 70,000 and polyallylamines having for example a molecular weight of from about 10,000 to about 60,000.

Typically, the amine group-containing soft segment will include a polyamine as described above in an amount of from about 30 to about 90 weight percent of the entire composition. The hard segment of the composition of the present invention may include for example a polyimide as described above in an amount of from about 10 to about 70 weight percent of the entire composition.

In practice, the membrane can be built up by a separation layer that is disposed upon a support layer. For asymmetric inorganic membranes, the porous support can exhibit a material that is different from the separation layer. Support materials for asymmetric inorganic membranes include porous alumina, titania, cordierite, carbon, silica glass (e.g., Vycor), and metals, as well as combinations comprising at least one of these materials. Porous metal support layers include ferrous materials, nickel materials, and combinations comprising at least one of these materials, such as stainless steel, iron-based alloys, and nickel-based alloys. Polymeric membranes can be disposed on polymeric or inorganic supports.

According to another embodiment of the present application, the carbon dioxide can be separated in the second step by Electric Swing Adsorption (ESA). This process is based on a novel carbon-bonded activated carbon fiber which represents a carbon activated carbon fiber which is also called a carbon fiber composite molecular sieve (CFCMS). The carbon dioxide which is physically adsorbed on this CFCMS can be desorbed by the passage of an electric current, thereby creating a low energy electrical swing system. The electrical energy which is required for the desorption step is approximately equal to the heat of adsorption of the carbon dioxide. It is possible to regenerate the (CFCMS) without increasing the temperature, potentially reducing the swing cycle time and improving separation capacity [Burchell, Z.D., Judkin, R.R., Rogers, M.R., and Williams, A.M, "A Novel Process and Material for the Separation of Carbon Dioxide and Hydrogen Sulfide Gas Mixtures", Carbon, 35 (9): 1279-94) - the content of which is incorporated by reference in their entirety].

According to another embodiment of the present application, the carbon dioxide can be separated in the second step using the CO₂ Hydrate Separation Process which is primarily used for the water gas shift reaction. This process is based on the fact that CO₂ will form a hydrate at a temperature near 0 °C and a pressure in the range of 10 - 70 atmospheres. The CO₂ Hydrate Separation Process is a two-stage process. In the first step, "nucleated water" which is saturated with CO₂ is formed in a first reactor where circulating ammonia provides the cooling. In a second reactor, shifted synthesis gas reacts with the nucleated water at pressures in the range from 6 to 20 atmospheres. Under these reaction conditions, CO₂ hydrates are rapidly formed which fix all CO₂ which enters the reactor [Wong, S. and Bioletti, R., Carbon Dioxide Separation Technologies, Carbon & Energy Management, Alberta Research Council, Edmonton, Alberta, T6N 1E4, Canada - the content of which is incorporated by reference in their entirety].

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from essential scope thereof. Therefore, it is intended that the invention not be limited to the particular embodiment disclosed as the best mode contemplated for carrying out this invention, but that the invention will include all embodiments falling within the scope of the appended claims.

Ranges disclosed herein are inclusive and combinable (e.g., ranges of "up to about 25 wt%, or, more specifically, about 5 wt% to about 20 wt%", is inclusive of the endpoints and all intermediate values of the ranges of "about 5 wt% to about 25 wt%," etc.). "combination" is inclusive of blends, mixtures, alloys, reaction products, and the like. Furthermore, the terms "first," "second," and the like, herein do not denote any order, quantity, or importance, but rather are used to distinguish one element from another, and the terms "a" and "an" herein do not denote a limitation of quantity, but rather denote the presence of at least one of the referenced item. The modifier "about" used in connection with a quantity is inclusive of the state value and has the meaning dictated by context, (e.g., includes the degree of error associated with measurement of the particular quantity). The suffix "(s)" as used herein is intended to include both the singular and the plural of the term that it modifies, thereby including one or more of that term (e.g., the catalyst(s) includes one or more catalysts). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments. For example, different sorbents - like different amines - can be combined for use in the second carbon dioxide selective separation unit or different kinds of carbon dioxide units - like absorption and/or adsorption units - can be combined; for example, a pressure swing adsorption unit and a chemical absorption unit which is working for example with an aqueous solution of an alkali carbonate salt.

## Claims

1. A hybrid carbon dioxide separation system comprising a carbon dioxide reverse selective membrane as a first separation unit and a downstream second separation unit.

2. The hybrid carbon dioxide separation system in accordance with claim 1, wherein the second separation unit is a carbon dioxide selective separation unit.

3. The hybrid carbon dioxide separation system in accordance with claim 2, wherein the carbon dioxide selective separation unit is a chemical absorption unit.

4. The hybrid carbon dioxide separation system in accordance with claim 3, wherein the chemical absorption unit involves a reversible chemical reaction between the carbon dioxide and an aqueous solution of an absorbent.

5. The hybrid carbon dioxide separation system in accordance with claim 4, wherein the absorbent is a water-soluble primary, secondary or tertiary alkyl, hydroxyl alkyl and/or arylalkyl amine or a sterically hindered amine having bulky substituents at the nitrogen atom.

6. The hybrid carbon dioxide separation system in accordance with claim 5, wherein the primary, secondary or tertiary alkyl or hydroxyl alkyl amine is mono ethanol amine, diglycol amine, diethanol amine, di-isopropyl amine, triethanol amine and/or methyl-diethanol amine.

7. The hybrid carbon dioxide separation system in accordance with claim 4, wherein the absorbent is an alkaline salt of a weak acid typically a sodium or potassium salts of carbonate, phosphate, borate, arsenite, or phenolate..

8. The hybrid carbon dioxide separation system in accordance with claim 4, wherein the absorbent is an organic or inorganic solvent typically a dimethyl ether of a polyethylene glycol or methanol.

9. The hybrid carbon dioxide separation system in accordance with claim 2, wherein the carbon dioxide selective separation unit is a pressure swing unit, a temperature swing unit or an electrical swing adsorption unit.

10. The hybrid carbon dioxide separation system in accordance with claim 2, wherein the carbon dioxide selective separation unit is a carbon dioxide selective membrane.

11. The hybrid carbon dioxide separation system in accordance with claim 2, wherein the carbon dioxide selective separation unit is a carbon dioxide hydrate separation unit.

12. Use of a hybrid carbon dioxide separation system according to claims 1 - 11 for the separation of carbon dioxide.
